# EUROPEAN PATENT APPLICATION

(11) **EP 4 570 742 A1**
(43) Date of publication of application: **18.06.2025**
(21) Application number: 23216316.2
(22) Date of filing: 13.12.2023
(51) Int. Cl.: C01B 3/02, C01B 3/34, C01B 3/48, C25B 1/04, C01B 3/36, C01B 3/38, C10G 7/00, C10G 9/18

(54) **METHOD FOR PRODUCING HYDROGEN**

(71) Applicant: BASF SE, 67056 Ludwigshafen am Rhein (DE)
(72) Inventor: Dahmen, Stefan, 67056 Ludwigshafen am Rhein (DE); Unger, Joerg, 67056 Ludwigshafen am Rhein (DE)
(74) Representative: Meissner Bolte Partnerschaft mbB

(57) **Abstract**

A method for producing hydrogen comprises a) performing water electrolysis to produce oxygen and a first hydrogen product stream; b) reforming a hydrocarbon stream with oxygen to produce a reformed stream containing COₓ and hydrogen; c) optionally, subjecting said reformed stream to a water gas shift process to produce a shifted product stream containing additional hydrogen and carbon dioxide; and separating hydrogen from the shifted product stream to produce a second hydrogen product stream; and d) directing oxygen produced in step a), optionally after buffering, to step b). The method allows for producing constant, continuous and uninterrupted amounts of emission-free hydrogen accomodating external influences such as fluctuations with weather conditions, day-night cycles and seasons. Said process can be run continuously and is not reliant on only one energy source which might be fluctuating.

## Description

The present invention relates to a method for producing hydrogen.

Hydrogen is considered a preferred and environmentally friendly energy carrier of the future due to its potential for zero carbon (CO₂) emissions during its combustion by consumer, including stationary consumers such as industrial consumers.

Emission-free hydrogen can be produced by electrolysis of water by using renewable energy sources. Alternatively, emission-free hydrogen can also be produced from natural gas as well as from gaseous waste streams containing hydrocarbons, especially aliphatic hydrocarbons, using reforming technologies in combination with carbon capture of the resulting CO₂ from process or energy related emissions. Steam Methane Reforming (SMR), autothermal reforming (ATR), or partial oxidation (POX) split the C-H bonds and generate hydrogen, and CO₂, or, put otherwise, oxidize the carbon to CO₂ and generate hydrogen.

The obtained emission-free hydrogen may be used as a storable and transportable green energy carrier, or, alternatively, directly be fired, e.g. for generating heat to be supplied to high temperature chemical processes. As outlined above, hydrogen combustion is not associated with carbon (CO₂) emissions. Thus, in a case where emission-free hydrogen is used, CO₂ emissions may be reduced or even avoided completely.

Especially, in the case where hydrogen is directly fired, e.g. in basic chemical processes, it is to be noted that such basic chemical processes are optimized to run at constant high utilization rates and therefore require a constant heat supply. Furthermore, such processes are notoriously difficult to turn down in dependence on the availability of hydrogen (demand-side management). Hence, direct firing of hydrogen requires a constant, continuous and uninterrupted supply of hydrogen.

However, the availability of emission-free hydrogen produced by electrolysis of water using renewable energy sources is still limited today. Additionally, the availability of renewable energy from wind-power and photovoltaics fluctuates with weather conditions, day-night cycles and seasons.

It is therefore an object of the present invention to provide a method for producing hydrogen which enables a constant, continuous and uninterrupted supply of hydrogen.

Hence, the invention relates to a method for producing hydrogen, comprising
a) performing water electrolysis to produce oxygen and a first hydrogen product stream;
b) reforming a hydrocarbon stream with oxygen to produce a reformed stream containing COₓ and hydrogen;
c) optionally, subjecting said reformed stream to a water gas shift process to produce a shifted product stream containing additional hydrogen and carbon dioxide; and separating hydrogen from the shifted product stream to produce a second hydrogen product stream; and
d) directing oxygen produced in step a), optionally after buffering, to step b).

The present invention provides a process for producing hydrogen which allows for producing constant, continuous and uninterrupted amounts of emission-free hydrogen accomodating external influences such as fluctuations with weather conditions, day-night cycles and seasons. Said process can be run continuously and is not reliant on only one energy source which might be fluctuating.

For this purpose, two energy independent sources of emission free hydrogen are combined to warrant a constant supply of hydrogen which can be shifted from one source to the other depending on the availability of renewable power. One source of hydrogen originates from water electrolysis (step a)), and the other source of hydrogen originates from reforming of a hydrocarbon stream (step b)), e.g. of the methane fraction of a steam cracker, in combination with carbon capture such as CCS.

In the case that sufficient renewable power is available, hydrogen mainly originates from the water electrolysis (step a)). In the case that only low amounts of renewable energy are available, hydrogen mainly originates from reforming using oxygen (step b)) in combination with carbon capture. A minor fraction of hydrogen and oxygen can still come from water electrolysis (step a)).

In an embodiment, a volume stream of the first hydrogen product stream varies, e.g. according to availability of electric current provided to step a), and a volume stream of the second hydrogen product stream is increased, when the volume stream of the first hydrogen product stream decreases. In other words, step c) is performed in a case where the amount of the first hydrogen product stream falls below a pre-determined threshold value. As a result, the second hydrogen product stream fills the gap to the threshold value.

### Water electrolysis

In step a), hydrogen in the form of the first hydrogen product stream is produced via water electrolysis.

The electrolysis of water is an electrolytic reaction that decomposes water into gaseous oxygen and hydrogen by means of an electrical current according to the reaction:

H₂O → H₂ + ½ O₂.

In a preferred embodiment, the electric current provided to step a) originates from renewable sources. In other words, the water electrolysis is preferably processed by using regenerative energy, e.g., energy from wind parks, solar power plants, or hydroelectric power plants.

Water electrolysis may be carried out using different technologies like alkaline, polymer electrolyte membrane (PEM) or as solid oxide electrolysis cell (SOEC). For example, typical parameters are described in Final Report BMBF funded project: "Studie über die Planung einer Demonstrationsanlage zur Wasserstoff-Kraftstoffgewinnung durch Elektrolyse mit Zwischenspeicherung in Salzkavernen unter Druck PlanDelyKaD", DLR et al, Christoph Noack et al, Stuttgart, 05.02.2015.

PEM water electrolysers use polymer electrolyte membranes, typically with appropriately catalyzed electrodes deposited on either side to form membrane-electrode assemblies (MEA). Hydrogen is produced at the cathodes (negative electrodes), and oxygen is produced at the anodes (positive electrodes) upon passage of current between the electrodes. The rates of production of hydrogen and oxygen are proportional to the current flow in the absence of parasitic reactions for a given physical size of electrolyser. The electrolyte consists of the hydrated proton exchange membranes, which are ionically (proton) conducting through migration of protons between ion exchange sites under a voltage gradient. The solid membranes also serve to maintain the hydrogen and oxygen gases separate and of high purity.

An electrolyzer of the SOEC type is used to implement high-temperature electrolysis, said electrolyzer consisting of a stack of individual units that each comprise a solid-oxide electrolysis cell consisting of three layers (anode/electrolyte/cathode) that are superposed on one another, and of interconnection plates made of metal alloys, are also referred to as bipolar plates or interconnectors. The function of the interconnectors is both to let electrical current pass and gases flow to each cell and to separate the anode and cathode compartments, which are the gas-flow compartments on the anode side and the cathode side of the cells, respectively. To carry out high-temperature electrolysis of steam, steam is injected into the cathode compartment. Under the action of the current applied to the cell, dissociation of water molecules in steam form takes place at the interface between the hydrogen electrode (cathode) and the electrolyte: this dissociation produces hydrogen gas (H₂) and oxygen ions. The hydrogen is collected and discharged at the outlet of the hydrogen compartment. The oxygen ions (O²⁻) migrate through the electrolyte and recombine into oxygen at the interface between the electrolyte and the oxygen electrode (anode).

The production site of the water electrolysis is preferably close to the site of the generation of regenerative energy. Preferably, the water electrolysis and the generation of regenerative energy are conducted at the same production site.

Electrolysis of water also produces oxygen as a by-product. The oxygen may directly be used in other chemical processes. For example, reforming processes such as autothermal reforming (ATR) requiring an oxidant preferably use oxygen instead of air as oxidant (see in detail below). According to the invention, oxygen produced in water electrolysis, optionally after buffering, is directed to a hydrocarbon reforming step b). Said oxygen may be stored. Oxygen storage techniques are familiar to the skilled person.

### Reforming/Hydrocarbon-to-Hydrogen Conversion

In step b), a hydrocarbon stream is reformed with oxygen to produce a reformed stream containing COₓ and hydrogen. Thus, at least a part of the hydrogen produced in the process of the invention is obtained from reforming.

The term "COₓ" is a collective term for carbon oxides, including carbon monoxide (CO) and carbon dioxide (CO₂), and their mixtures in various ratios.

The hydrocarbon stream may include methane. For example, the hydrocarbon stream may at least partially be a hydrocarbon-containing by-product-stream comprising methane originating from a high temperature conversion process such as a hydrocarbon cracking process, as described in further detail below.

In a preferred embodiment, the reforming is selected from Auto Thermal Reforming (ATR), and Partial Oxidation (POX), or combinations thereof such as a combination of two of the aforementioned processes.

Preferably, the hydrogen content in the hydrocarbon stream subjected to the reforming process, especially to any of the aforementioned reforming processes, is 4 wt.-% or less, more preferably 3 wt.-% or less, most preferably 1 wt.-% or less, in particular 0.5 wt.-% or less, in particular 0.1 wt.-% or less.

The oxygen produced in water electrolysis (step a)), is directed, optionally after buffering, to step b). Additionally, at least a part of the sub-stoichiometric amount of oxygen may be obtained from an (additional) air-separation unit, as described in detail below.

### Auto Thermal Reforming (ATR)

Auto thermal reforming is a variant of the partial oxidation process (described in further detail below) using oxygen and steam, and optionally also carbon dioxide, in a reaction with hydrocarbons, most often methane or methane enriched feedstocks, to form synthesis gas containing hydrogen and carbon monoxide.

With a hydrocarbon feed containing higher hydrocarbons, pre-reforming is generally employed. This avoids the potential problems of olefin formation from higher hydrocarbons in the ATR and reduces the possibility of coke formation on the main reformer catalyst. In the pre-reformer, typically a steam reformer, all higher hydrocarbons (C₂₊) are converted into a mixture of methane, hydrogen, carbon monoxide and carbon dioxide according to the following reactions:

CₙHₘ + nH₂O → nCO + (n+m/2)H₂ (for n ≥ 2) (1)

### Equilibrium reactions:

CO + 3H₂ ↔ CH₄ + H₂O (2)

CO + H₂O ↔ CO₂ + H₂ (3)

Generally, for methane, the following reactions occur in auto thermal reforming:

C₃H₈ → C₂H₄ + CH₄. (4)

CH₄ + H₂O → CO + 3H₂ (5)

CH₄ + 2H₂O → CO₂ + 4H₂ (6)

2CH₄ + O₂ → 2CO + 4H₂ (7)

CO₂ + H₂ → CO + H₂O (8)

4CH₄ + O₂ + 2H₂O → 10H₂ + 4CO (9)

In auto thermal reforming, a catalyst is used to permit reforming to occur at lower temperatures than the partial oxidation process. Moderate amounts of steam are typically used to prevent the catalyst from coking.

Conventional feedstocks for autothermal reforming are natural gas, LNG, naphtha and/or kerosene. It is desirable that the feedstock does not contain sulfur compounds as these compounds are strong poisons to the catalysts used in steam reforming. Feedstocks, catalysts, process parameters as well as reaction setups including reactor types are well known in the art (see e.g. Ullmann's Encyclopedia of Industrial Chemistry, Hydrogen, 2. Production, 1.3 Catalytic reforming of Hydrocarbons, DOI: 10.1002/14356007.o13_o03 or Ullmann's Encyclopedia of Industrial Chemistry, Gas Production, 2. Processes, 1. Steam Reforming of Natural Gas and other Hydrocarbons, 1.5. Autothermal Catalytic

Reforming, DOI: 10.1002/14356007.o12_o01). As outlined above, a by-product-stream from a cracker may be used as the feedstock, i.e. as the hydrocarbon stream, for the autothermal reforming in whole or in part.

Generally, for carrying out an auto thermal reforming process, a feed stream is vaporized and water is provided in the form of steam. For this purpose, the feed stream and water may be subjected to a vaporization process in a vaporizer. Typically, the vaporizer is heated by hot combustion gases provided form a combustor, enabling the vaporizer to vaporize the feed stream and water channeled therethrough. Then, the vaporized feed stream, steam and air are mixed using a mixing unit and the resulting mixture is introduced into an auto thermal reformer.

The main elements of the auto thermal reformer are a burner, a combustion chamber, and a catalyst bed contained within a refractory lined pressure shell. The catalyst is typically nickel-based. In the auto thermal reformer, partial combustion of the hydrocarbon feed stream by sub-stoichiometric amounts of oxygen is followed by reaction of the partially combusted feedstock with steam in a fixed bed of steam reforming catalyst. Reaction of hydrocarbon with steam also takes place to some extent in the combustion chamber due to the high temperature. The steam reforming reaction is accompanied by water gas shift reactions. Typically, the synthesis gas leaves the auto thermal reformer having an outlet temperature in the range of from 850 to 1100 °C and an outlet pressure of up to 100 bar.

### Partial Oxidation (POX)

Partial oxidation is a non-catalytic process where a sub-stoichiometric amount of oxygen is allowed to react with a carbonaceous material like natural gas, liquid feeds such as fuel oils, gas oils, and/or coal at high temperatures to give synthesis gas containing hydrogen and carbon monoxide. Feedstocks, process parameters as well as reaction setups including reactor types are well known in the art (e.g Ullmann's Encyclopedia of Industrial Chemistry, Hydrogen, 2. Production, 1.2 Gasification of Coal and Hydrocarbons, DOI: 10.1002/14356007.o13_o03 or Ullmann's Encyclopedia of Industrial Chemistry, Gas Production, 2. Processes, 2. Noncatalytic Partial Oxidation and Special Gasification Processes for Higher-Boiling Hydrocarbons, DOI: 10.1002/14356007.o12_o01). Herein, as outlined above, a by-product-stream from a cracker may be used as the feedstock, i.e. as the hydrocarbon stream, for the partial oxidation in whole or in part.

For methane, partial oxidation proceeds according to main reactions (7) and (8), see above for ATR.

For these partial oxidation reactions, the carbonaceous feed material is mixed with molecular oxygen and introduced into a partial oxidation reactor at an elevated temperature of at least 1200 °C and reacted thermally without a catalyst. Typically, the temperature of the synthesis gas leaving the partial oxidation reactor is in the range of from 1200 to 1300 °C or higher. In principle, the partial oxidation reaction can be carried out without any steam addition.

The reformed stream containing COₓ and hydrogen, wherein CO is the main constituent of COₓ, may be directly used in chemical synthesis.

Besides hydrogen, the reformed stream typically comprises carbon monoxide, carbon dioxide and water. The reformed stream may also comprise trace amounts of methane and/or C₂₊ alkanes. The amounts of hydrogen, carbon monoxide, carbon dioxide, water, methane and/or C₂₊ alkanes in the reformed stream depend on the employed feedstock in the reforming process and the reforming process itself.

### Water gas shift process

To obtain the second hydrogen product stream from the reformed stream, the reformed stream is either subjected to gas separation techniques to create a stream with higher hydrogen content, or first subjected to a separate water gas shift process (step c)) and subsequently subjected to gas separation techniques. In the water gas shift reaction, the carbon monoxide formed in the above-mentioned reforming processes may be partly converted into carbon dioxide using steam to shift CO to CO₂; as a side-product, additional H₂ is produced in the process; see also reaction (3) above.

In optional step c), the reformed stream, obtained from reforming the hydrocarbon stream with oxygen, may be subjected to a water gas shift process to produce a shifted product stream containing additional hydrogen and carbon dioxide; and hydrogen may be separated from the shifted product stream to produce the second hydrogen product stream.

The "second hydrogen product stream" resulting from the water gas shift process comprises hydrogen as its main constituent. Preferably, the second hydrogen product stream comprises at least 60 vol.-%, more preferably at least 70 vol.-%, most preferably at least 85 vol.-%, in particular at least 95 vol.-%, in particular at least 99 vol.-% of hydrogen. Besides hydrogen, the second hydrogen product stream may comprise carbon dioxide, carbon monoxide, methane, C₂₊ alkanes and/or water.

For gas separation of the reformed stream, high boiling impurities such as water, carbon dioxide and/or C₂₊ alkanes are typically removed first. Separation of C₂₊ alkanes can be achieved by condensation or distillation processes. Separation of water can be achieved by scrubbing, e.g. with glycol. Separation of CO₂ can be achieved by gas washing, for example by acid gas removal. Mixtures comprising hydrogen, carbon dioxide and methane as main constituent, for example when the originating mixture was already subjected to gas separation techniques to remove the higher boiling components, can be separated by cryogenic processes, pressure swing absorption and/or methane scrubbing. Two or more methods can be combined to increase the purity of the obtained hydrogen. A detailed description of purification processes for hydrogen can be found exemplary in Ullmann's Encyclopedia of Industrial Chemistry, Hydrogen, 3. Purification, DOI: 10.1002/14356007.o13_o04.

In the water gas shift reaction occurring in the water gas shift process, CO contained in the reformed stream is reacted with H₂O to produce H₂ and CO₂. The shifted product stream obtained from the water gas shift process has higher concentrations of H₂ and CO₂ compared to the reformed stream.

The water gas shift reaction and technical realizations are well known in the art as a means to increase the hydrogen content and/or reduce the carbon monoxide content of synthesis gases produced by reforming, e.g. by steam reforming, auto thermal reforming or partial oxidation etc.

The reaction is mildly exothermic and a favorable equilibrium on the CO₂ and H₂ side is obtained at low temperatures. However, it is often convenient to operate a single shift process at elevated temperatures to generate shifted gas mixtures with low CO contents (typically < 10 mol-% on a dry gas basis). To achieve acceptable conversion, iron-containing catalysts have found widespread use as so-called high-temperature-shift (HTS) catalysts. These catalysts are typically provided as a particulate fixed bed in axial or radial-flow shift converters that are operated at inlet temperatures above 340 °C in order to achieve an acceptable activity. Alternatively, cobalt-molybdenum catalysts, which can be used in so-called "sour shift" processes, may be operated with inlet temperatures above 220 °C.

In addition to being a reactant, the steam also helps to move the equilibrium of the water gas shift reaction towards H₂, controlling the temperature rise from the exothermic water gas shift reaction, which if left unchecked could deactivate the catalyst. The steam is also required to prevent coking on the catalyst surface, which also deactivates the catalyst.

Typically, the water gas shift process uses two reactors in series to carry out a high temperature shift (HTS) followed by a low temperature shift (LTS). Steam is added to the synthesis gas fed to the first reactor. The synthesis gas from the outlet of the first reactor is cooled to the desired shift inlet temperature by adding more steam and the cooled synthesis gas is subsequently fed to the second reactor. From the second reactor, a shifted product stream is obtained containing additional hydrogen and carbon dioxide.

Subsequently, the carbon dioxide from the shifted product stream is preferably separated to produce the second hydrogen product stream, besides a carbon dioxide-containing stream. Remaining carbon monoxide or other impurities in the shifted product stream, respectively in the second hydrogen product stream, can be separated by the means of gas separation as described above.

Separation of the carbon dioxide from the reformed stream or from the shifted product stream if an additional water gas shift process is performed has the advantage that CO₂ can be separated from a gas stream with a remarkably higher CO₂ concentration than a flue-gas stream originating from natural gas firing. This brings the advantages that smaller gas volumes can be treated to capture the emitted CO₂. The treatment of smaller gas volumes reduces the energy input needed for CO₂ capturing and thus reduces costs for carbon capture compared to a post-combustion carbon capture.

### Acid gas Removal

Typically, carbon capturing involves separating CO₂ from the reformed stream or shifted product stream. This may include capturing the CO₂ in liquid solvents. Subsequently, the capturing medium needs to be regenerated without releasing the CO₂ into the atmosphere.

Frequently, the liquid solvents used for CO₂ capturing are solutions of inorganic or organic bases. On dissolving acid gases in the solvent, ion-pairs form with the bases. The solvent can be regenerated by expansion to a lower pressure or by stripping, the ionic species reacting back to form acid gases and/or being stripped off by means of steam. After the regeneration process, the solvent can be reused.

If CO₂ represents only a small percentage of a large volume of a gas stream to be treated, such as off-gas, treating a large flow stream to recover a small portion of it as CO₂ is wasteful and expensive. Unlike off-gas, the reformed stream and/or the shifted product stream are streams having high CO₂ concentrations and therefore, CO₂ capturing from these streams is more efficient in view of energy input for CO₂ separation.

Suitably, the absorption liquid medium is an aqueous solution of at least one amine having a total amine content in the range of from 30 to 70 wt.-%, preferably 40 to 60 wt.-%.

Preferably, the amine is selected from monoethanolamine (MEA), methylaminopropyl-amine (MAPA), piperazine, diethanolamine (DEA), triethanolamine (TEA), diethylethanolamine (DEEA), diisopropylamine (DIPA), aminoethoxyethanol (AEE), dimethylaminopropanol (DIMAP), methyldiethanolamine (MDEA), methyldiisopropanol-amine (MDIPA), 2-amino-1-butanol (2-AB), or mixtures thereof.

Preferred absorption media comprise at least one alkanolamine having 4 to 12 carbon atoms. Particularly preferred absorption media comprise at least one tertiary alkanolamine and preferably an activator in the form of a primary or secondary amine. Preferred activators are saturated, 5- to 7-membered heterocyclic compounds having at least one NH group and, if appropriate, a further heteroatom in the ring selected from an oxygen atom and a nitrogen atom. For example, suitable activators are selected from piperazine, 1-methylpiperazine, 2-methylpiperazine, 1-aminoethylpiperazine, morpholine and piperidine. Other preferred activators are selected from methylamino-propylamine, 2-amino-1-butanol or aminoethoxyethanol.

### Oxygen Utilization

In step d), oxygen produced in step a) is directed to step b). In other words, oxygen obtained in water electrolysis (step a)) is directly used in reforming (step a)), e.g. in autothermal reforming (ATR).

Typically, oxygen from water electrolysis contains different amounts of hydrogen depending of the electrolysis process. In many processes, due to safety reasons, hydrogen needs to be removed from oxygen before the oxygen can be used. In the reforming process of step b), e.g. autothermal reforming (ATR), hydrogen-containing oxygen can advantageously be directly used, i.e. without the necessity of removing remaining hydrogen. This is because said reforming process of step b), e.g. autothermal reforming (ATR), produce hydrogen as a by-product.

In cases where water electrolysis (step a)) does not yield a sufficient amount for carrying out reforming of step b), providing an additional source of oxygen may be necessary. This may be accomplished by providing an air-separation unit. Air-separation units are known per se.

Advantageously, the (additional) air-separation unit for supplying oxygen, e.g. for autothermal reforming (ATR), can be scaled down or even completely avoided depending on expected energy availabilities in water electrolysis (step a)).

### Carbon dioxide-containing stream

As described above, separating hydrogen from the shifted product stream produces a carbon dioxide-containing stream in addition to the second hydrogen product stream.

For an emission-reduced operation, the captured carbon dioxide-containing stream needs to be subjected to, for example, storage in a carbon pool, i.e. to carbon sequestration ("carbon capture and storage" (CCS)), or to direct use in downstream processes, i.e. to "carbon capture and utilization" (CCU). In other words, it must be prevented or at least avoided as far as possible that the obtained carbon dioxide is released into the environment, as this would increase the emission of greenhouse gases.

In order to avoid problems in downstream processes such as CCS, CCU etc., the obtained water-containing, i.e. wet, carbon dioxide-containing stream has to be treated for removing H₂O. Thus, in a preferred embodiment, the carbon dioxide-containing stream is subjected to a drying step to obtain a dried carbon dioxide-containing stream. Typically, such drying step is carried out using at least one vessel containing at least one desiccant for adsorbing the moisture from the wet carbon dioxide-containing stream. For this purpose, the wet carbon dioxide-containing stream is passed over the desiccant in one direction. Suitable desiccants are known per se.

Subsequently, the desiccant needs to be regenerated. For desiccant regeneration, the flow through the desiccant bed is provided in the reverse direction. Typical installations foresee two dryers, where one is in operation whilst the other is in standby, respectively in regeneration mode.

In a preferred embodiment, the dried carbon dioxide-containing stream is liquefied or brought in its supercritical stage and subsequently subjected to carbon dioxide sequestration. Carbon dioxide sequestration of CO₂ originating from renewable resources is a so called "negative emission technology". A negative emission technology removes, i.e. captures, carbon dioxide equivalents from the atmosphere by sequestering, i.e. storing, the carbon dioxide for long periods of time. In other words, CO₂ may be removed from the atmosphere by carbon dioxide sequestration. These negative emission technologies have been developed aiming at combating the current levels of greenhouse gas carbon dioxide and their projected rate of increase. Thus, negative emission technologies can include enhanced carbon sinks that provide for long-term storage of the removed carbon dioxide.

For example, carbon dioxide sequestration, also referred to as "carbon capture and storage" (CCS), may involve "geological carbon sequestration" such as hydrodynamic trapping, solubility trapping or mineral trapping. Geological carbon sequestration involves storing the captured and dried carbon dioxide-containing stream underneath the surface of the earth, e.g. by pumping the same into pores of underground geological formations or into deep ocean layers.

Further examples of negative emission technologies include terrestrial carbon sequestration, coastal blue carbon capture, and mineral carbonation of carbon dioxide. Generally, terrestrial carbon sequestration entails increasing forestation and agricultural soil carbon content, while coastal blue carbon sequestration focuses on similar processes at tidal or wetland areas. Mineral carbonation refers to atmospheric or captured carbon dioxide being contacted with basaltic or ultramafic rocks to undergo a chemical reaction to convert the carbon dioxide into a chemical solid.

Preferably, the dried carbon dioxide-containing stream is subjected to carbon dioxide utilization. Carbon dioxide utilization, also referred to as "carbon dioxide capture and utilization" aims at recycling captured carbon dioxide for converting the same to useful solid or liquid materials such as methanol, olefins, plastics, carbon fibers, biomass such as biofuel ("bioenergy carbon capture and storage"), carbon-based chemicals etc. Bioenergy carbon capture entails capturing the dried carbon dioxide-containing stream and using the captured carbon dioxide in a biomass that is used in fuels. In case the CO₂ originates from renewable resources, carbon dioxide capture and utilization is also an example of a "negative emission technology".

### Hydrogen combustion

In an embodiment, at least a part of the first and/or second hydrogen product stream is combusted to provide thermal energy to a high temperature conversion process. Such combustion of hydrogen for providing thermal energy is environmentally friendly as it results in zero carbon (CO₂) emissions during its combustion, as described above.

### Cracking

The high temperature conversion process may be a hydrocarbon cracking process which produces a cracked gas from which one or more product streams and one or more hydrocarbon-containing by-product-streams are recovered; and the process comprises directing at least one of the by-product-streams or a partial stream thereof as the hydrocarbon stream to step b). In other words, the resulting hydrocarbon-containing cracker by-product-stream may preferably be introduced into the reforming of step b) as the hydrocarbon stream.

As a result, at least a part of the first and/or second hydrogen product stream(s), originating from the water electrolysis of step a) and/or the reforming of step b), respectively, may be combusted to provide all or part of the thermal energy for the high temperature conversion process. In other words, this plant set-up may enable the use of hydrogen firing for providing thermal energy as a full or partial replacement of firing fossil resources such as natural gas as in common prior art processes. Generally, combusting hydrogen yields water as the only by-product. Thus, advantageously, this embodiment allows for an emission-reduced operation of the cracking process. Herein, by the term "emission-reduced operation" is meant that the emission of greenhouse gases such as carbon dioxide is avoided or at least reduced. In other words, this embodiment advantageously allows for an operation under a reduced carbon footprint.

Cracking is a petrochemical process wherein saturated hydrocarbons having long molecular structures are broken down, i.e. cracked, into smaller saturated or unsaturated molecules. Generally, crackers aim at producing light alkenes as valuable products, especially ethylene and propylene. Cracking processes include fluid catalytic cracking (FCC) and steam cracking. In a preferred embodiment, the hydrocarbon cracking process is a steam cracking process.

### Steam cracking

Conventional steam cracking utilizes a pyrolysis furnace which has two main sections: a convection section and a radiant section. The hydrocarbon feedstock typically enters the convection section of the furnace as a liquid, or, in a case where light feedstocks are used, as a vapor, wherein it is typically heated and, if necessary, vaporized by indirect contact with hot off-gas from the radiant section and by direct contact with steam. The vaporized feedstock and steam mixture is then introduced into the radiant section where the cracking takes place.

The resulting stream having a temperature typically in the range of from 500 to 650 °C enters a fired tubular reactor and is heated to a temperature typically in the range of from 750 to 875 °C for 0.1 to 0.5 s, wherein the residence time, temperature profile and partial pressure is controlled. During this short reaction time, hydrocarbons in the feedstock are cracked into smaller molecules yielding light olefins such as ethylene, propylene, butylenes, other small olefins, and diolefins as major products besides methane. These reaction products suitably typically leave the radiant tube at a temperature in the range of 800 to 850 °C and are preferably cooled to a temperature typically in the range of from 550 to 650 °C within 0.02 to 0.1 s in order to prevent degradation of the highly reactive compounds by secondary reactions. Then, the resulting reaction products leave the furnace for further downstream processing.

### Fluid catalytic cracking

In fluid catalytic cracking (FCC), a particulate catalyst, often having a particle size in the range of from 20 to 100 µm, circulates between a cracking reactor and a catalyst regenerator. In the reactor, a hydrocarbon feed contacts the hot, regenerated catalyst. The hot catalyst vaporizes and cracks the feed typically at 425 to 600 °C. The cracking reaction deposits carbonaceous hydrocarbons, which eventually turn to coke on the catalyst, thereby deactivating it. The cracked products are separated from the coked catalyst, usually with the aid of a catalyst stripper, and the stripped catalyst is then regenerated within the regenerator. A catalyst regenerator burns coke from the catalyst with oxygen containing gas, usually air. Regeneration of the catalyst by oxidation restores catalyst activity and simultaneously typically heats the catalyst to 500 to 900 °C. The heated catalyst is recycled to the cracking reactor to crack more fresh hydrocarbon feed. Catalytic cracking is an endothermic reaction. Suitably, the heat for cracking and vaporization of the feed is supplied by the hot regenerated catalyst from the regenerator. In an embodiment, this includes that the thermal energy generated by combustion of at least a part of the first and/or second hydrogen product stream may be provided to the regenerator.

### Cracker feedstock

The hydrocarbon feedstock introduced into the cracker may originate from upstream refinery processes such as an atmospheric distillation tower, hydrocracker, coker etc. and typically contains naphtha, liquefied petroleum gas (LPG), ethane, propane and/or butane. Alternatively or additionally, the hydrocarbon subjected to the cracking process may be selected from natural gas, recyclate, bio-based gas, bio-naphtha, ethane, propane, butanes, or bio-liquefied petroleum gas (bio-LPG).

The term "natural gas" encompasses a naturally occurring mixture of gaseous hydrocarbons which primarily consists of methane in addition to small amounts of other higher alkanes such as ethane, propane etc. Natural gas is a fossil fuel and thus a non-renewable source of energy.

The term "recyclate" encompasses pyrolysis oils obtained by pyrolysis of recycled plastic waste materials. Thus, recyclate is a renewable source of energy.

The term "bio-based gas" encompasses is a mixture of gases, primarily consisting of methane besides carbon dioxide and hydrogen sulfide which is produced from raw materials such as agricultural waste, manure, municipal waste, plant material, sewage, green waste, food waste etc. Thus, bio-based gas is a renewable source of energy.

The term "naphtha" encompasses liquid hydrocarbon mixtures produced from natural gas condensates, petroleum distillates, and the distillation of coal tar and peat. Thus, naphtha is a non-renewable source of energy.

The term "bio-naphtha" encompasses naphtha produced from complex mixtures of naturally occurring fats and oils. Thus, bio-naphtha is a renewable source of energy.

The term "liquefied petroleum gas (LPG)" encompasses a fuel gas containing a flammable mixture of hydrocarbon gases, in particular propane and butane. Liquefied petroleum gas is prepared by refining petroleum or "wet" natural gas. Thus, liquefied petroleum gas is a non-renewable source of energy.

The term "bio-liquefied petroleum gas (bio-LPG)" encompasses liquefied petroleum gas produced from complex mixtures of naturally occurring fats and oils. Thus, bio-naphtha is a renewable source of energy.

### Processing of the cracked gas

Herein, the designator "Cₓ" refers to a hydrocarbon including x carbon atoms, "Cₓ₊" refers to a hydrocarbon or mixture of hydrocarbons including x or greater carbon atoms, and "Cₓₘᵢₙᵤₛ" refers to a hydrocarbon of mixture of hydrocarbons including x or fewer carbon atoms.

Usually, the resulting reaction mixture comprising light olefins such as ethylene, propylene, butylenes, other small olefins, and diolefins besides methane is separated by using a sequence of separation and chemical-treatment steps. The process typically also generates light side products such as hydrogen, carbon oxides, light saturated hydrocarbons, and water. Suitably, the resulting product-of-interest streams (hereinafter referred to as "product streams"), especially ethylene and propylene, are either used directly in downstream processes or stored in storage vessels for subsequent use or long-term storage.

As the products of interest from the cracked gas are separated, i.e., condensed or distilled out, one or more hydrocarbon-containing by-product streams, such as off-gas streams, having little commercial value remain. These streams are collectively referred to as hydrocarbon-containing by-product-streams herein. These by-product-streams contain at least one hydrocarbon which may be selected from methane, saturated hydrocarbons, in particular saturated C₂ to C₃ hydrocarbons, or C₅₋₉ hydrocarbons. The by-product-streams may contain hydrogen in addition to these hydrocarbons. In an embodiment, the by-product-stream includes methane as a main hydrocarbon constituent, e.g., at least 75 vol.-% of methane, preferably at least 85 vol.-% of methane, relative to the hydrocarbons comprised in the by-product-stream. These by-product-streams have conventionally been burnt as fuel gas or else recycled as feedstock to the cracker unit.

The hot cracked gas leaving the cracker is cooled down quickly in order to prevent unwanted follow-up reactions. This is usually done in several steps. In a first step, the cracked gas is cooled down to about 450° C by heat exchangers. A further cooling step occurs via direct contact between the cracked gas and a high boiling liquid, usually referred to as quench oil. The quench results in a partial condensation of the cracked gas. In this step, a heavy stream rich in C₁₀₊. hydrocarbons is separated from the cracked gas. A further cooling step of the cracked gas takes place in a water quench column for primary fractionation, cooling down the gas to around 30 °C. In this step, a C₅₋₉ fraction, commonly referred to as pyrolysis gasoline, is separated from C₄ₘᵢₙᵤₛ components.

The pyrolysis gasoline may be hydrogenated to remove olefinic unsaturation and sent to benzene extraction. Extractive benzene separation may be performed in an extractive distillation column. For this purpose, the pyrolysis gasoline or, more preferably, the hydrogenated pyrolysis gasoline, is introduced into the extractive distillation column and benzene is absorbed by means of a suitable absorbent such as N-methylpyrrolidone (NMP). In the extractive distillation column, a bottom product obtained from NMP with dissolved benzene is discharged to a benzene stripper. The overhead vapor from the extractive distillation flows to a raffinate column in order to recover NMP. The NMP with some dissolved hydrocarbons is discharged back to the extractive distillation column. The top product from the raffinate column mainly contains saturated hydrocarbons and qualifies as a by-product-stream to be subjected to reforming (step b)).

The heavy stream rich in C₁₀₊ hydrocarbons as well as pyrolysis gasoline, either before or after hydrogenation or benzene extraction may be used as a by-product-stream subjected to reforming (step b)).

Hence, in an embodiment, the method involves a quench of hot cracked gas with a high-boiling liquid, wherein a heavy stream comprising C₁₀₊ hydrocarbons is separated from the cracked gas, and a water quench, wherein pyrolysis gasoline is separated from the cracked gas, optionally subjecting the pyrolysis gasoline to hydrogenation, optionally subjecting the hydrogenated pyrolysis gasoline to extractive separation of benzene, and subjecting at least one of the heavy stream, the pyrolysis gasoline, the hydrogenated pyrolysis gasoline and the benzene-depleted hydrogenated pyrolysis gasoline or a partial stream thereof as the by-product-stream to reforming (step b)).

The recovery of the various olefin products from cracked gas is usually carried out by fractional distillation using a series of distillation steps or columns to separate out the various components. The unit which separates hydrocarbons with one carbon atom (C₁) and lighter fraction is referred to as "demethanizer". The unit which separates hydrocarbons with two carbon atoms (C₂) from the heavier components is referred to as "deethanizer". The unit which separates the hydrocarbon fraction with three carbon atoms (C₃) from the heavier components is referred to as "depropanizer". The unit which separates the hydrocarbon fraction with four carbon atoms (C₄) from the heavier components is referred to as "debutanizer."

The residual heavier components having a higher carbon number fraction (C₅₊) may be used as gasoline or recycled back to the cracker. Alternatively, they may be sent as a by-product-stream to reforming (step b)).

The various fractionation units may be arranged in a variety of sequences in order to provide desired results based upon various feedstocks. To that end, a sequence which uses the demethanizer first is commonly referred to as the "front-end demethanizer" sequence. Similarly, when the deethanizer is used first, it is commonly referred to as the "front-end deethanizer" sequence. And, when the depropanizer is used first, it is commonly referred to as "front-end depropanizer" sequence.

In the conventional front-end demethanizer sequence, the cracked gas containing hydrocarbons having one to five or more carbon atoms per molecule (C₁ to C₅₊) first enters a demethanizer, where methane and lighter fractions (hydrogen) are separated as an over-head stream. The demethanizer operates at relatively low temperatures, typically ranging from about -100 °C to about 25 °C.

The front-end demethanizer over-head stream constitutes a suitable by-product-stream to be directed to reforming (step b)). Alternatively, hydrogen contained in the front-end demethanizer over-head stream may be removed first and the remaining gas consisting mainly of methane is directed to reforming (step b)).

The heavy ends exiting the demethanizer consist mainly of C₂ to C₅₊ molecules. These heavy ends then are routed to a deethanizer where the C₂ hydrocarbons are taken over the top and the C₃ to C₅₊ compounds leave as bottoms. The C₂ components leaving the top of the deethanizer may be fed to an acetylene converter or acetylene removal unit. As some methane remains dissolved in the heavy ends exiting the demethanizer and ends up in the C₂ components leaving the deethanizer, the C₂ components stream may be subsequently sent to a demethanizer for removal of the remaining methane. This residual demethanizer over-head stream constitutes a suitable off-gas stream to be directed to reforming (step b)).

Hence, in a preferred embodiment, the method comprises recovery of the product streams from the cracked gas by a series of distillation steps including at least one demethanizer, in which methane and lighter fractions, including hydrogen, are separated as an over-head stream, optionally separating the over-head stream to obtain a hydrogen rich stream and a methane rich stream, and directing the over-head stream or the methane rich stream or partial streams thereof as the hydrocarbon stream to step b).

The over-head stream from the demethanizer comprises methane and hydrogen as the main components. The ratio of methane and hydrogen in the over-head stream may vary depending on the cracking operation, respectively the cracking feedstock (see for example Ullmann's Encyclopedia of Industrial Chemistry, Ethylene 5.1.3 Commercial Cracking Yields, DOI: 10.1002/14356007.a10_045.pub3 for different cracking yields depending on different cracker feedstocks) but the methane content is generally in the range of from 40 to 95 wt.-%, preferably 90 to 95 wt.-% of methane, with the remainder being mainly hydrogen.

In an embodiment, the over-head stream is separated into a hydrogen rich stream and a methane rich stream. Preferably, the methane rich stream has a methane content of at least 96 wt.-%, more preferably at least 98 wt.-%, most preferably at least 99 -wt.%, in particular at least 99.9 wt.-%. Preferably, the hydrogen rich stream has a hydrogen content of at least 90 wt.-%, more preferably at least 95 wt.-%. The methane rich stream or at least parts thereof are subjected as the by-product stream to reforming (step b)). The hydrogen rich stream or at least a part thereof may be combined with the first and/or second hydrogen product stream and, e.g., be subjected to combustion to provide thermal energy to the high temperature conversion process.

Separating the over-head stream and subjecting only the methane rich stream as by-product stream to reforming (step b)) leads to a higher overall hydrogen yield compared to subjecting the over-head stream directly to reforming. Since reforming (step b)) is based on equilibrium reactions, it may be detrimental to the overall yield of hydrogen if the hydrocarbon feed stream to reforming comprises significant amounts of hydrogen.

Separation of hydrogen and methane can be achieved by pressure swing adsorption.

The C₂ components from which methane has been removed are then sent to a C₂ splitter which produces ethylene as the light product and ethane as the heavy product. The C₃ to C₅₊ stream leaving the bottom of the deethanizer is routed to a depropanizer, which sends the C₃ components overhead and the C₄ to C₅₊ components below.

The C₃ product may be hydrotreated to remove C₃ acetylene and dienes before being fed to a C₃ splitter, where it is separated into propylene at the top and propane at the bottom.

Both ethane from the C₂ splitter and propane from the C₃ splitter constitute by-product-streams that may be directed to the reforming (step b)).

Hence, in an embodiment, the method comprises recovery of the product streams from the cracked gas by a series of distillation steps including a separation of saturated and unsaturated C₂ hydrocarbons in a C₂ splitter and/or separation of saturated and unsaturated C₃ hydrocarbons in a C₃ splitter, and subjecting the saturated C₂ hydrocarbons and/or the saturated C₃ hydrocarbons or a partial stream thereof as the by-product-stream to reforming (step b)).

The C₄ to C₅₊ stream is fed to a debutanizer, which produces C₄ components at the top with the balance of C₅₊ components leaving as bottoms. Both the C₄ and the C₅₊ streams may be separately hydrotreated to remove undesirable acetylenes and dienes.

In conventional front-end deethanizer sequences, the cracked gas containing C₁ to C₅₊ components first enters a deethanizer. The light ends exiting the deethanizer consist of C₂ and C₁ components along with any hydrogen (C₂ₘᵢₙᵤₛ fraction). These light ends are fed to a demethanizer (C₂ₘᵢₙᵤₛ demethanizer) where the hydrogen and C₁ are removed as light ends and the C₂ components are removed as heavy ends. The C₂ stream leaving the bottom of the demethanizer may be fed to an acetylene converter and then to a C₂ splitter which produces ethylene as the light product and ethane as the heavy product. The heavy ends exiting the deethanizer which consist of C₃ to C₅₊ components are routed to a depropanizer which sends the C₃ components over-head and the C₄ to C₅₊ components below. The C₃ product is fed to a C₃ splitter where it is separated into propylene at the top and propane at the bottom, while the C₄ to C₅₊ stream is fed to a debutanizer which produces C₄ compounds at the top with the balance leaving as bottoms to be used for gasoline or to be recirculated as feed into the cracking process. As with the front-end demethanizer sequence, the C₃, C₄, and C₅₊ streams may be separately hydrotreated to remove undesirable acetylenes and dienes.

In conventional front-end depropanizer sequences, the quenched and acid-free gases containing hydrocarbons having from one to five or more carbon atoms per molecule (C₁ to C₅₊) first enter a depropanizer. The heavy ends exiting the depropanizer consist of C₄ to C₅₊ components. These are routed to a debutanizer where the C₄ components and lighter species are taken over the top with the rest of the feed leaving as bottoms which can be used for gasoline or other chemical recovery. These streams may be separately hydrotreated to remove undesired acetylenes and dienes. The tops of the depropanizer, containing C₁ to C₃ components, may be fed to an acetylene converter and then to a demethanizer system, where the C₁ components and any remaining hydrogen are removed as an over-head. The heavy ends exiting the demethanizer system, which contains C₂ and C₃ components, are introduced into a deethanizer wherein C₂ components are taken off the top and C₃ compounds are taken from the bottom. The C₂ components are, in turn, fed to a C₂ splitter which produces ethylene as the light product and ethane as the heavy product. The C₃ stream is fed to a C₃ splitter which separates the C₃ species, sending propylene to the top and propane to the bottom.

As with the front-end demethanizer sequence, the saturated C₂ hydrocarbons and/or the saturated C₃ hydrocarbons obtained in the front-end deethanizer sequence or the front-end depropanizer sequence or a partial stream thereof may be sent as the by-product-stream to reforming (step b)). Alternatively, the saturated C₂ hydrocarbons and/or the saturated C₃ hydrocarbons or a partial stream thereof is recycled as feed into the cracking process.

### Providing thermal energy to a high temperature conversion process, e.g. to a hydrocarbon cracking process

As described above, in an embodiment, at least a part of the first and/or second hydrogen product stream is combusted to provide thermal energy to a high temperature conversion process, preferably to a hydrocarbon cracking process.

Conversion of saturated hydrocarbons to olefins is highly endothermic. Thus, cracking is a very energy intense petrochemical process. The cracking furnaces are the largest fuel consumers in a cracking plant. While the light saturated hydrocarbons from the cracker, e.g. comprising methane, may be fired directly for generating thermal energy, firing the light saturated hydrocarbons results in the production of carbon dioxide which is disadvantageous in view of an operation of the process under a reduced carbon footprint. It is apparent that providing at least a part of the required energy for this process in the form of "clean" thermal energy, i.e. energy produced with a reduced CO₂ footprint, instead of energy originating from firing the light saturated hydrocarbons would be advantageous.

Therefore, in an embodiment, the first hydrogen product stream originating from step a) and/or the second hydrogen product stream originating from step b) may be at least partially combusted to provide thermal energy to the high temperature conversion process, e.g. to the cracking process. As described above, the combustion of at least part of the first and/or second hydrogen product stream ideally yields water as the only by-product instead of carbon dioxide and is therefore particularly advantageous in view of reducing carbon dioxide emissions, or, in other words, for reducing the carbon footprint of this process.

For combustion, at least part of the first and/or second hydrogen product stream is mixed with oxygen and combusted in burners or heating coils of the high temperature conversion process, e.g. of the cracking process. In addition to oxygen, water and/or methane may be added to the fuel. In case methane is added to the fuel, it is preferable to avoid methane separation from the reformed stream or the shifted stream.

The portion of the first and/or second hydrogen product stream which is not subjected to combustion to provide thermal energy to the high temperature conversion process, e.g. to the cracking process, may be stored or transported for use elsewhere. Hence, it is preferably introduced into a hydrogen transportation network and/or used in hydrogenation reactions such as CO₂ hydrogenation to methanol.

Separation of the first and/or second hydrogen product stream into parts which are subjected to combustion to provide the thermal energy to the high temperature conversion process, e.g. to the cracking process, and parts which are introduced into a hydrogen transportation network and/or are used in hydrogenation reactions can be achieved by means known in the art, such as controlled valves.

Preferably, the amount of the first and/or second hydrogen product stream which is subjected to combustion to provide thermal energy to the high temperature conversion process, e.g. to the cracking process, is in the range of from 50 to 100%, more preferably 80 to 100%, most preferably 95 to 100%.

In the case that at least a part of the thermal energy to operate the high temperature conversion process, e.g. the cracking process, is provided by means of electrical energy, respectively by electricity, the amount of the first and/or second hydrogen product stream subjected to combustion to provide thermal energy to the high temperature conversion process, e.g. the cracking process, is reduced accordingly.

### Integration of externally-derived energy carriers

The method of the invention enables the use of various energy carriers depending on their availability.

In an embodiment, the method comprises adding a methane rich stream to the by-product-stream to form a combined stream and subjecting the combined stream to reforming (step b)). The term "methane rich stream" denotes a stream consisting predominantly or exclusively of methane, for example a gas having a methane content of at least 50 vol.-%, the remainder being hydrocarbons other than methane or inert gases having no caloric value. A preferred methane rich stream is natural gas.

The resulting process is still an emission-reduced operation of the high temperature conversion process, e.g. the cracking process. It involves the reduction of CO₂ emissions from the thermal utilization of the natural gas stream by pre-combustion carbon capture. Thus, carbon dioxide is removed from the reformed stream or from the shifted product stream or captured as solid carbon during methane pyrolysis.

In a preferred embodiment, the method comprises adding a bio-based gas stream to the by-product-stream to form the combined stream and subjecting the combined stream to reforming (step b)). In contrast to the above-mentioned embodiment, the additional source of energy added to the by-product-stream to obtain the combined stream is bio-based gas, i.e. a non-fossil, renewable source of energy.

The term "bio-based gas" encompasses is a mixture of gases, primarily consisting of methane besides carbon dioxide and hydrogen sulfide which is produced from raw materials such as agricultural waste, manure, municipal waste, plant material, sewage, green waste, food waste etc. Thus, bio-based gas is a renewable source of energy.

This results in an even more emission-reduced operation or even negative carbon-footprint operation of the high temperature conversion process, e.g. the cracking process. This is because one part of the energy used for firing the high temperature conversion process, e.g. the cracking process stems from "clean" hydrogen, i.e. produced with a reduced CO₂ footprint, obtained by reforming (step b)), and another part of the energy stems from bio-based gas as a non-fossil, renewable source of energy.

Alternatively or additionally to the aforementioned embodiments, the method comprises adding additional hydrogen to the first and/or second hydrogen product stream. This measure may be advantageous in cases where a hydrogen stream is readily available from an external source.

The resulting process is still an emission-reduced operation of the high temperature conversion process, e.g. the cracking process. This is because at least part of the energy used for firing the high temperature conversion process, e.g. the cracking process, stems from a "clean" source of energy, i.e. energy produced with a reduced CO₂ footprint, obtained by reforming (step b)). For example, the additional hydrogen may be obtained from an ammonia splitting process, from methane pyrolysis and/or waste gasification.

In the event that the additional hydrogen stems from methane pyrolysis, this results in an even more emission-reduced operation of the high temperature conversion process, e.g. the cracking process.

In a preferred embodiment, the method comprises providing at least a part of the thermal energy required for the operation of the high temperature conversion process, e.g. the cracking process, by means of electrical energy, preferably electricity. More preferably, the electrical energy and electricity originates from renewable sources.

In case where the electrical energy, respectively electricity originates from renewable sources, an even more emission-reduced operation of the high temperature conversion process, e.g. the cracking process, is achieved.

In case when additional hydrogen is readily available from an external sources as mentioned above and/or when at least part of thermal energy required to operate the high temperature conversion process, e.g. the cracking process, is provided by means of electrical energy, it is preferred to use at least a part of the reformed stream, precisely the synthesis gas contained in the reformed stream, to produce chemicals like methanol, ethanol or aldehydes in hydroformylation reactions of olefins. In such an embodiment, the reformed stream or parts of the reformed stream are not subjected to a water gas shift process and synthesis gas is separated from the reformed stream and further used to produce chemicals.

## Claims

1. A method for producing hydrogen, comprising
a) performing water electrolysis to produce oxygen and a first hydrogen product stream;
b) reforming a hydrocarbon stream with oxygen to produce a reformed stream containing COₓ and hydrogen;
c) optionally, subjecting said reformed stream to a water gas shift process to produce a shifted product stream containing additional hydrogen and carbon dioxide; and separating hydrogen from the shifted product stream to produce a second hydrogen product stream; and
d) directing oxygen produced in step a), optionally after buffering, to step b).

2. The method of claim 1, wherein a volume stream of the first hydrogen product stream varies, e.g. according to availability of electric current provided to step a), and a volume stream of the second hydrogen product stream is increased, when the volume stream of the first hydrogen product stream decreases.

3. The method of claim 1 or 2, wherein electric current provided to step a) originates from renewable sources.

4. The method of any one of the preceding claims, wherein the hydrocarbon stream includes methane.

5. The method of any one of the preceding claims, comprising combusting at least a part of the first and/or second hydrogen product stream to provide thermal energy to a high temperature conversion process.

6. The method of claim 5, wherein the high temperature conversion process is a hydrocarbon cracking process which produces a cracked gas from which one or more product streams and one or more hydrocarbon-containing by-product-streams are recovered; and the process comprises
directing at least one of the by-product-streams or a partial stream thereof as the hydrocarbon stream to step b).

7. The method of claim 6, comprising recovery of the product streams from the cracked gas by a series of distillation steps including at least one demethanizer, in which methane and lighter fractions are separated as an over-head stream, optionally separating the over-head stream to obtain a hydrogen rich stream and a methane rich stream, and
directing the over-head stream or the methane rich stream or partial streams thereof as the hydrocarbon stream to step b).

8. The method of claim 6 or 7, wherein the hydrocarbon cracking process is a steam cracking process.

9. The method of any one of claims 6 to 8, wherein the hydrocarbon subjected to the cracking process is selected from natural gas, recyclate, bio-based gas, naphtha, bio-naphtha, ethane, propane, butanes, liquefied petroleum gas (LPG), or bio-liquefied petroleum gas (bio-LPG).

10. The method of any one of the preceding claims, wherein the reforming is selected from Auto Thermal Reforming (ATR), and Partial Oxidation (POX), or combinations thereof.

11. The method of any one of the preceding claims, wherein separating hydrogen from the shifted product stream produces a carbon dioxide-containing stream in addition to the second hydrogen product stream, and the carbon dioxide-containing stream is liquefied or brought in its supercritical stage and subsequently subjected to carbon dioxide sequestration.
